# EUROPEAN PATENT APPLICATION

(11) **EP 4 659 942 A1**
(43) Date of publication of application: **10.12.2025**
(21) Application number: 24180758.5
(22) Date of filing: 07.06.2024
(51) Int. Cl.: B29C 70/38, G06F 30/20

(54) **COMPUTER-ASSISTED METHOD FOR CONTROLLING A DEPOSITION PROCESS IN AN AUTOMATED FIBER PLACEMENT DEVICE AND AUTOMATED FIBER PLACEMENT DEVICE FOR EXECUTING THE METHOD**

(71) Applicant: AIRBUS Operations GmbH, 21129 Hamburg (DE)
(72) Inventor: Eschen, Henrik, 21129 Hamburg (DE); Boyksen, Jan, 21129 Hamburg (DE); Ohm, Jan Manuel, 21129 Hamburg (DE)

(57) **Abstract**

The present invention provides a computer-assisted method for controlling a deposition process in an automated fiber placement (AFP) device (100) for forming a composite structure (108) from a pre-impregnated fibre containing tape material by deposition tape sections (110) of different lengths by means of a placement head (107) according to a deposition sequence, wherein the tape sections (110) are provided by cutting a tape material (104) and having at least one slicing region (101), a computing device (112), an automated fibre placement (100) device for executing the method and a composite structure (108) manufactured using the method.

## Description

The present invention pertains to a tape structure for use in an automated fiber placement (AFP) method, an automated fiber placement device and method.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft and in manufacture of composite structures for other purposes.

Large scale composite structures such as wings or fuselage of aircrafts, aircraft wing shells or vertical tail plane (VTP) shells, but not limited thereto, are manufactured in automated fiber placement (AFP) methods. Automated fiber placement is often used to manufacture light weight structures, in particular carbon fiber reinforced plastics (CFRP) parts. Therein tapes, also referred to as slit-tapes, are used to build up a composite or laminate structures comprising several layers of pre-impregnated fiber containing matrices. The tapes with a predetermined width can be derived from a broader prepreg sheet. The slitting is used to ensure edge and width quality and prevent gaps or overlays in the tapes parallelly draped during processing. The tapes are in particular wound on a spool and provided to AFP devices for placing or laying the tapes in a predetermined region and in a predetermined laying path or in a deposition sequence on the composite structure or laminate.

Manufacturing carbon fibre reinforced plastic (CFRP) parts using an automated fibre placement (AFP) or automated tape laying (ATL) process use tape material provided on a spool , also referred to as tape roll and transported to a placement region by means of a plurality of guiding rolls. When manufacturing e.g. aircraft wing shells or vertical tail plane (VTP) shells, the material spools carrying the fiber reinforced tapes or tows are never fully emptied. Especially in the layup of large parts (e.g. wing covers) a comparably large amount of tape remains on the spool due to insufficient remaing tape length on the spool to complete the placement process. Since the material can not be used in the existing AFP or ATL processes, the material is either thrown away resulting in considerable amounts of waste or used for lower grade parts by cutting the tapes and using them in so called "forging processes". An alternative use scenario is to connect, i.e. by splicing the remaining short tapes to obtain a long tape that can be re-used in an AFP or ATL process again. However splicing alters the mechanical properties of the tape as well as the manufactured part and can only be used in lower quality parts.

Against this background, it is an object of the present invention to find an automated fibre or tape placement method and device that allow for efficient use of tapes comprising splicing regions in the manufacture of high quality laminates and composite structures, such as high quality aircraft parts from the tape material.

This object is achieved by a computer-assisted method for controlling a deposition process in an automated fiber placement (AFP) device having the features of claim 1, a computing device having the features of claim 7 and an automated fiber placement device having the features of claim 8.

According to a first aspect of the invention, a computer-assisted method for controlling a deposition process in an automated fiber placement (AFP) device for forming a composite structure from a pre-impregnated fibre containing tape material by deposition tape sections of different lengths by means of a placement head according to a deposition sequence, wherein the tape sections are provided by cutting a tape material provided in particular on a tape roll and having at least one splicing region is provided. The method comprises the steps of: providing a configuration data of the composite structure to be formed, providing, on the basis of configuration data, a data for the deposition sequence of the tape sections necessary for forming the composite structure, with the composite structure having a plurality of deposition positions for the tape sections and TARGET data for the length of the tape sections to be deposited in the respective deposition positions, providing of an ACTUAL data for the position of a splicing region in the tape material, providing of ACTUAL data on the length of the tape section available for the deposition between a deposition position and the splicing region after considering the splicing region, selecting a deposition position for the tape section by comparing the ACTUAL data for the length of the tape section available after considering the position of the splicing region with the TARGET data for the length of the tape section to be deposited in the respective deposition position, and outputting a control signal for the automated fibre placement device considering the splicing region when locating the deposition position.

Although the invention is described hereinafter mainly in connection with automated fibre placement (AFP) methods and devices, automated tape placement (ATP) devices and methods are likewise encompassed by the invention.

The method has the advantage to allow control of an automated fibre or tape placement device to efficiently use tape material including splicing regions for the manufacture of high quality aircraft parts thus reducing waste material and to reduce tape material generated from tape material remaining or recyled from earlier placement processes. With the invention method automated placement processes no longer need to be interrupted in order to avoid splicing regions being present in the manufactured composite structure or laminate. The method allows for controll of the automated fibre placement device to adjust the deposition sequence in order to place or deposit splicing regions outside the actual structure area of the composite structure. Manufacturing efforts such as for removela of splicing regions from a composite structure and continuous manual supervision of the process is thus avoided

A further aspect of the invention lies in a a computing device configured to: receive data for a deposition sequence for tape sections necessary for producing the composite structure, with the composite structure having a plurality of deposition positions for the tape sections, receive TARGET data for the length of the tape sections to be deposited in the respective deposition position, receive data for the TARGET length of the tape section to be deposited in the respective deposition position, receive ACTUAL data for a position of the splicing region to be considered, receive data for a deposition position for the tape section based on the ACTUAL data for the length of the tape section available before or after the splicing region, generate a deposition sequence based on the data; and output a control data file for an automated fiber placement device, the control data file including a plurality of machine-readable instructions. This has the advantage that a fully automated processing and controlling of an automated fiber placement device can be ensured considering splicing regions present in the tape material and avoiding deposition of these splicing regions in a composite structure to be manufactured, thus minimizing the manufacturing efforts and overcoming the requirement for continuous manual supervision of the process.

A further aspect of the invention lies in an automated fibre placement device for executing the method comprising the computing device, and a control unit to move the placement head according to the instructions of the control data file to deposit the respective tape sections in the respective deposition positions. This has the advantage that by the fully automated processing and controlling of the automated fibre placement device an efficient use of material can be ensured. The invention device allows for the use of tape materials having a shorter tape length than required for an efficient manufacturing process to manufacture high quality composite structures such as aircraft parts and to reduce waste material by continued use of high quality tape material remaining from earlier placement processes.

A further aspect of the invention lies in a computer program comprising instructions which, when the program is executed by a computing device, prompt it to carry out the steps of the invention method.

A further aspect of the invention lies in a computer-readable data carrier on which the computer program is stored.

A further aspect of the invention lies in a composite structure manufactured in the invention method, wherein the composite structure is preferably an aircraft part such as an aircraft wing shells or vertical tail plane (VTP) shell. This has the advantage that high quality composite structure or laminates made from composite material for aviation can be manufactured by efficiently using tapes or tape sections remaining from earlier placement processes without splicing regions of tape section being present in the manufactured structure or laminate. By applying the method to an existing manufacturing processes, the process ensures more efficient utilization of the semi-finished fiber products. By splicing and reusing fibre reinforced plastic tape material, in particular carbon-fibre reinforced plastic (CFRP) tapes, a higher overall material utilization can be achieved. As the logistics of the spliced tape rolls can follow the same system of the original supply, the invention method can have a great impact in particular in manufacturing of smaller composite structures with a structure area of less than or equal to 2m² as well as preforms. The invention method allows manufacturing in particular of these composite structures from up to 100% recycled material.

Advantageous embodiments and further developments are apparent from the further dependent claims and from the description with reference to the figures.

According to another aspect of the invention, the method comprises the step of providing the actual data on the position of the at least one splicing region on the basis of data recorded by a sensor provided in the automated fiber placement device. This has the advantage that the method can be applied in a running placement process while processing tape material that is in particular unwound from a spool or tape roll, is transferred to a placement head of an automated fibre placement device. The output signal can thus be adapted to consider the actually detected splicing regions within the tapes used and adjust in particular in situ the deposition sequence according to the tape structure provided.

According to an embodiment of the invention the method comprises providing ACTUAL data on the position of the at least one splicing region on the basis of a position data of the at least one splicing region in the rolled-up tape material recorded during a production of the tape roll. This has the advantage that the ACTUAL data on the position of the at least one splicing region is available upon selecting the tape roll and a determination of splicing regions during manufacture can be omitted thus further increasing the efficiency of the method due to adjusting the deposition sequence prior to initiating manufacture of the composite structure or laminate thereby achieving a reduction of the devices required in the automated fibre placement device for in situ detection and adjustment.

According to a further embodiment of the invention the method comprises provision of ACTUAL data of a length of tape sections available for deposition between the splicing regions on a tape roll on the basis of position data of the plurality of splicing regions in the rolled-up tape material recorded during the production of the tape roll. It is an advantage of this embodiment, that that ACTUAL data on the length of tape sections available for deposition is available upon selecting the tape roll and a determination of length during manufacture can be omitted thus further increasing the efficiency and accuracy of the method due to adjusting the deposition sequence prior to initiating manufacture of the composite structure or laminate thereby achieving a reduction of additional devices required in the automated fibre placement device for in situ length measurement and adjustment of the deposition sequence.

According to a further embodiment of the invention the method comprises providing for a selection of a tape roll by comparing the ACTUAL data for the lengths of the tape sections available before or after the the splicing regions with the TARGET data for the length of the tape sections to be deposited in the respective depositing positions for forming the composite structure. This has the advantage, that a predetermined data set can be provided comprising the actual data for splicing region positions and length of tape section without determination of this data during the manufacturing process. This embodiment allows for a selection of a tape roll that best fits the requirement for manufacturing the composite structure due to the data required in the method to output the control signal is available from the tape roll itself. Efficiency of the method and placement process is increased and waste further reduced. Acquisition of the actual data for the splicing region positions can be achieved by integrating into a splicing machine used during manufacture of the tape rolls or by a sensor for the detection of splicing regions that allows mapping of the position of splicing regions along the tape for each individual roll or spool of recycled/reused tape. Based on this dataset the invention method can be adapted to allow for advanced deposition sequence planning and to already consider the splicing regions in the individual tape during the planning of the deposition sequence. With this approach disposal of spliced tape sections is even possible on large parts where the length of the tape is greater than the distance between the splicing region detection sensor and the placement head along the tape path inside of the automated fibre placement device device. Additionally it is in particular possible to automatically validate for each splicing region whether it is in a critical position of the composite structure or laminate and needs to be cut out or can be placed in the composite structure or laminate without impairing the quality of the structure. For this evaluation the already placed tapes comprising splicing regions in the structure, as well as upcoming splicing regions in the tape are taken into account. In this setup the splice detection sensor in the automated fibre placement device can be used in order to synchronize the tape position in the automated fibre placement device device with the deposition sequence planning or adjustment.

According to a further embodiment of the invention the automated fibre placement (AFP) device is configured to detect splicing regions by means of a sensor device, to cut the tape material by means of a cutting device and to measure the tape length between the splicing region and the placement head by means of a length measuring device before depositing the tape sections in the deposition positions. This is of particular advantage in increasing the efficiency of the device if tape rolls are used without actual data of the position of the splicing regions and tape lengths and allows for an in situ adjustment of the deposition sequence based on the data acquired during in particular unwinding the tape from a tape roll and supplying the same to the placement head. By integrating sensor and measurement technology into the manufacturing process, the detection of splicing regions is made possible. The sensor for the detection of splicing regions is integrated into the automated fiber placement device and positioned along the fiber tape path between the storage system, such as in particular a spool or tape roll and the placement head. Through a control loop with the computer-assisted method according to the invention, the detected position of the splicing region can be taken into account in the deposition sequence planning, so that splicing regions are considered when cutting the tape using the cutting device that is provided in the automated fiber placement device or to deposit the splicing regions outside the composite structure or laminate, to generate parts with no splicing regions in the tapes used for manufacture.

According to a further embodiment of the invention in the automated fibre placement device the sensor device and the length measuring device are configured to output data on the ACTUAL position of the splicing region and data on the ACTUAL length of the tape section available to be received by the computing device. This has the advantage that based on the data received the deposition sequence can be adapted and the efficiency of the placement process be further increased.

According to a further embodiment of the invention the sensor device and/or the length measuring device is positioned adjacent to one of the tape roll, the cutting device and the placement head. This has the advantage that the layout of the automated fibre placement device can be configured according to the actual needs in the manufacturing site to obtain the data required to adapt the deposition sequence in the most efficient way.

According to a further embodiment of the invention the cutting device is positioned adjacent to one of the sensor device and the placement head. This has the advantage that the device and method can be furter adapted to the specific needs with respect to the data provided to the computing device and method and increase the overall efficiency of the device and method with respect to deposition sequence planning and adjustment.

The invention will be explained in greater detail with reference to exemplary embodiments depicted in the drawings as appended.
- Fig. 1: schematically depicts an automated fibre placement device according to an embodiment of the invention;
- Fig. 2: schematically depicts a tape roll for use in an automated fibre placement device according to an embodiment of the invention;
- Fig. 3: schematically depicts a composite structure according to an embodiment of the invention;
- Fig. 4: schematically depicts the steps of a computer-assisted method according to an embodiment of the invention; and
- Fig. 5: schematically depicts the steps of a computer-assisted method according to another embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

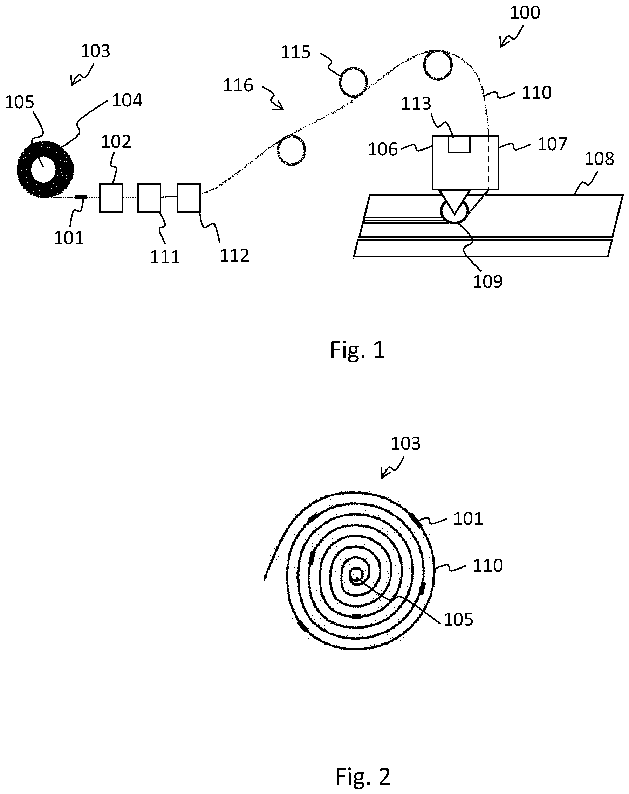

Fig. 1 depicts a schematic view of an automated fibre placement device 100 accordinmg to an embodiment of the invention. The automated fibre placement device 100 is configured to detect splicing regions 101 by means of a sensor device 102 placed adjacent to a tape roll 103 of tape material 104 wound on a spool 105 centering the tape roll 103. To remove the detected splicing regions 101 a cutting device 106 is included in a placement head 107 for depositing sections of the tape material 104 in a depositing position 109 in a composite structure 108 to be formed. To measure the length of the tape section 110 between the splicing region 101 and the placement head 107 a length measuring device 111 is provided that measures the length of the tape sections 110 before depositing the tape sections 110 in the deposition positions 109 on the composite structure 108. The embodiment of the automated fibre placement device 100 can be used with tape rolls 103 comprising one or more splicing regions 101 and acquires ACTUAL data of the position of the splicing regions 101 and tape section 110 lengths. This allows for an in situ adjustment of the deposition sequence based on the data acquired during unwinding the tape material 104 from the tape roll 103 and supplying the same to the placement head 107 via a serious of guiding rolls 115 in the tape path 116. By integrating sensor and measurement technology into the manufacturing process, the detection of splicing regions 101 is made possible. The sensor device 102 for the detection of splicing regions 101 is integrated into the automated fiber placement device 100 and positioned along the tape path between the storage system, i.e. the tape roll 103 and the placement head 107. Through a control loop with the computer-assisted method according to the invention, the detected position of the splicing region 101 can be taken into account in the deposition sequence planning, so that splicing regions 101 are cut out of the tape material 104 using the cutting device 106 that is provided in the automated fiber placement device 100 to remove the splicing regions 101 or to control the motion of the placement head 107 to dispose the splicing regions 101 outside the composite structure 108 or laminate to generate parts with no splicing regions 101 in the tape material 104 used for manufacture. The sensor device 102 and the length measuring device 111 are configured to output data on the ACTUAL position of the splicing region 101 and data on the ACTUAL length of the tape section 110 available to be received by the computing device 112 integrated in the automated fiber placement device 100 according to the embodiment shown. The computing device 112 can also be provided as part of a superordinated device control (not shown) of the automated fiber placement device 100. Based on the data received the deposition sequence can be adapted and the efficiency of the placement process be further increased. Without limiting the invention thereto, the sensor device 102 and the length measuring device 111 are positioned adjacent to the tape roll 103, the cutting device 106 is positioned in the placement head 107. The automated fibre placement device 100 comprises a control unit 113 to move the placement head 107 according to the instructions of a control data file generated in the invention method and control the placement head 107 to deposit the respective tape sections 110 in the respectivly defined or adjusted deposition positions 109 and deposition sequence. The embodiment of the automated fibre placement device 100 disposes of a fully automated processing and control and allows for efficient use of tape material 104 to manufacture high quality composite structures 108 such as aircraft parts, thereby reducing waste tape material 104 by continued use of high quality tape material 104 without splicing regions 101 being placed within the composite structure 108 formed.

Fig. 2 schematically depicts a tape roll 103 for use in an automated fibre placement device 100 as described before. A tape material 104 is rolled on a spool 105 provided in the center of the tape roll 103. The tape material 104 consist of a plurality of tape sections 110 connected via a splicing region 101 to form the tape material 104. In one embodiment of the tape roll 103 ACTUAL data on the position of the splicing regions 101 and ACTUAL data of a length of tape sections 110 in the rolled-up tape material 104 was recorded during a production of the tape roll 103, i.e. during procuction of the tape material 104 by splicing a plurality of tape sections 110 remaining from earlier placement processes or during winding the spliced tape material 104 on the spool 105. In this embodiment the ACTUAL data on the position of the splicing region 101 is available upon selecting the tape roll 103. A determination of splicing regions 101 during manufacture can thus be omitted and the efficiency of the method further increased due to adjusting the deposition sequence prior to initiating manufacture of the composite structure 108. In another embodiment the splicing regions 101 are detected by means of the sensor device 102 and the length of the tape sections 110 between the splicing region 101 and the placement head 107 is determined by a measuring device 111 of the automated fibre placement device 100 and the ACTUAL data is then provided to the computing device 112 to allow for outputting a control signal for the automated fibre placement device 100 for removing the splicing region 101 and locating the deposition position 109 in adjustment with the available length of the respective tape section 110. By integrating sensor and measurement technology into the manufacturing process, the detection of splicing regions 101 is made possible. The sensor device 102 for the detection of splicing regions 101 is integrated into the automated fiber placement device 101 and positioned along the fiber tape path between the tape roll 103 and the placement head 107. Through a control loop with the computer-assisted method according to the invention, the detected position of the splicing region 101 can be taken into account in the deposition sequence planning, so that splicing regions 101 are cut out of the tape material 104 using the cutting device 106 that is provided in the automated fiber placement device 100 to remove the splicing regions 101 or to control the placemnet process that the splicing regions 101 are disposed outside the composite structure 108 or laminate during manufacture.

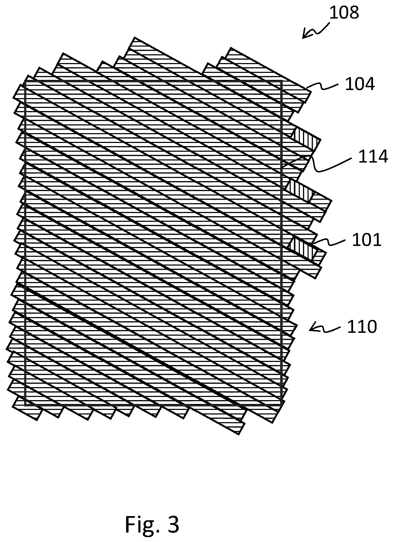

Fig. 3 schematically depicts a composite structure 108 according to an embodiment of the invention. The composite structure 108 is manufactured in a method according to the invention by depositing a plurality of tape sections 110 of a tape material 104 in a depositing sequence. The invention method is based on a standard manufacturing process for fibre reinforced plastic components. By applying the method to an existing manufacturing processes, the process ensures more efficient utilization of the semi-finished fiber products. By splicing and reusing the fibre reinforced plastic tape material 104, in particular carbon-fibre reinforced plastic (CFRP) tapes, a higher overall material utilization can be achieved. As the logistics of the spliced tape rolls 103 can follow the same system of the original supply, the invention method can have a great impact in particular in manufacturing of smaller composite structures with a structure area 114 of less than or equal to 2m² as well as preforms. The invention method allows manufacturing in particular of these composite structures 108 from up to 100% recycled material.

Tape material 104 are split if the mother coils used have a shorter tape length than required for an efficient manufacturing process. In standard processes the deposition is interrupted in order to avoid splicing regions 101 to be deposited in the composite structure 108. If tape sections 110 comprising splicing regions 101 were deposited an already deposited tape material comprising the splicing region 101 is removed from from the composite structure 108. The tape material 104 is then deposited again. However, this is only possible with considerably greater effort, and continuous manual supervision. In addition, the tape material 104 removed cannot be reused, so a full tape roll 103 has to be disposed of.

The invention method allows for enhanced planning of a depositon sequence and motion control of the placement head 107 during fiber placement by integrating measurement technology, the detection as present in recyled tape material 104 either outside the structure area 114 or removal of splicing regions 101 by means of the cutting device 106. For this additional sensor devices 102 are integrated into existing or new fiber placement devices 100 and the invenionmethoid isexecuted to adjust the deposition sequence and/or placement of tape material 104.

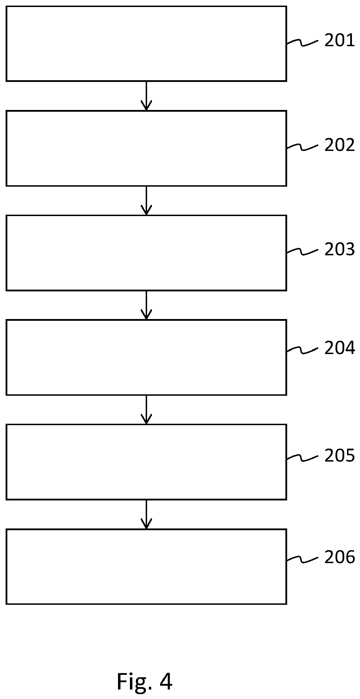

Fig. 4 depicts schematically the method steps of a computer-assisted method according to an embodiment of the invention. The method is applied for controlling a deposition process in an automated fiber placement device 100 for forming a composite structure 108 from a pre-impregnated fibre containing tape material 104 by deposition tape sections 110 of different lengths by means of a placement head 107 according to a deposition sequence. The tape sections 110 are provided by cutting a tape material 104 provided on a tape roll 103 and having at least one slicing region 101. In a first step 201 a configuration data of the composite structure 108 to be formed is provided. Based on the configuration data, a data for the deposition sequence of the tape sections 110 necessary for forming the composite structure 108 is derived indicating a plurality of deposition positions for the tape sections 110 and defining a TARGET data for the length of the tape sections 110 to be deposited in the respective deposition positions. In a second step 202 an ACTUAL data for the position of a splicing region 101 in the tape material 104 is identifed by means of a sensor device 102. In the second step 202 also an ACTUAL data on the length of the tape section 110 available for the deposition between a deposition position 109 and the splicing region 101 after removing the splicing region 101 is provided by means of a measuring device 111. In a third step 203 a deposition position for the tape section 110 is selected by comparing the ACTUAL data for the length of the tape section 110 available after removal of the splicing region 101 with the TARGET data for the length of the tape section 110 to be deposited in the respective deposition position. In a fourth step 204 a selection is made whether the splicing region 101 is removed by cutting the tape material 104 to avoid placement of the sliscing region 101 in the composite structure 108 to be manufactured or to adjust the depositing sequence during manufacture in a way to ensure that the splicing region 101 is positioned outside a structure area 114 by depositing the tape section 110 during manufacture. In a fifth step 205 a control signal for the automated fibre placement device 100 is output that controls the removal of the splicing region 101 and adjustment of the deposition sequence for the tape section 110 available for deposition. In the last step 206 the motion of the automated fibre placement device 100 is controlled by a control unit 113 of the automated fibre placement device 100 configured to receive the output control signal.

By applying the method, it is primarily possible to reuse material residues that are identified as waste for the currently used manufacturing processes. By reacting directly to splicing regions 101 before they are deposited in the composite structure 108, not only can the waste produced be reduced, but it also leads to improved mechanical properties of the composite structure 108, as no defects are created in the structure area 114 of the manufactured composite structure 108. Furthermore, an uninterrupted operation of the automated fibre placement device 100 is ensured, which further reduces the operational costs. The method can also be applied in retrofitting existing automated fibre placement devices 100.

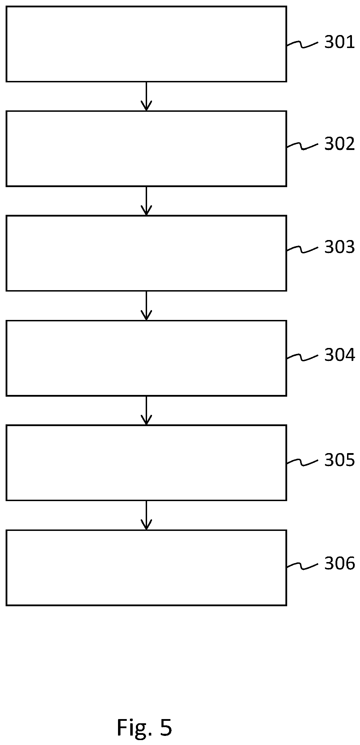

Fig. 5 schematically depicts the steps of the computer-assisted method according to another embodiment of the invention for forming a composite structure 108 from a pre-impregnated fibre containing tape material 104 in an automated fiber placement device 100 by deposition tape sections 110 of different lengths by means of a placement head 107 according to a deposition sequence. The tape sections 110 are provided by cutting a tape material 104 provided on a tape roll 103 and having at least one slicing region 101.

In a first step 301 the ACTUAL data of the position of splicing regions 101 in the rolled-up tape material 104 is recorded during production of the tape roll 103 together with ACTUAL data of the length of tape sections 110 available for deposition between the splicing regions 101 on then tape roll 103 on the basis of position data of the splicing regions 101 in the rolled-up tape material.

In a second step 302 a configuration data of the composite structure 108 to be formed is provided. Based on the configuration data, a data for the deposition sequence of the tape sections 110 necessary for forming the composite structure 108 is derived indicating a plurality of deposition positions for the tape sections 110 and defining a TARGET data for the length of the tape sections 110 to be deposited in the respective deposition positions.

In a third step 303 a selection of a tape roll 103 is made by comparing for the resepctve tape roll 103 the ACTUAL data for the lengths of the tape sections 110 available after the removal of the splicing regions 101 with the TARGET data for the length of the tape sections to be deposited in the respective depositing positions 109 for forming the composite structure 108. Based thereon a predetermined data set is provided comprising the ACTUAL data for splicing region 101 positions and length of tape section 110 without determination of this data during the manufacturing process. In step 303 a selection of a tape roll 103 that best fits the requirement for manufacturing the composite structure 108 due to the data required in the method to output the control signal is provided based on the tape roll 103 configuration.

In a fourth step 304 a selection is made whether the splicing region 101 is removed by cutting the tape material 104 to avoid placement of the sliscing region 101 in the composite structure 108 to be manufactured or to adjust the depositing sequence during manufacture in a way to ensure that the splicing region 101 is positioned outside a structure area 114 by depositing the tape section 110 during manufacture. In a fifth step 305 a control signal for the automated fibre placement device 100 is output that controls the removal of the splicing region 101 and adjustment of the deposition sequence for the tape section 110 available for deposition. In the last step 306 the motion of the automated fibre placement device 100 is controlled by a control unit 113 of the automated fibre placement device 100 configured to receive the output control signal.

### List of reference signs

- 100: automated fibre placement device
- 101: splicing region
- 102: sensor device
- 103: tape roll
- 104: tape material
- 105: spool
- 106: cutting device
- 107: placement head
- 108: composite structure
- 109: depositing positions
- 110: tape section
- 111: measuring device
- 112: computing device
- 113: control unit
- 114: structure area
- 115: guiding rolls
- 116: tape path
- 201, 301: first step
- 202, 302: second step
- 203, 303: third step
- 204, 304: fourth step
- 205, 305: fifth step

## Claims

1. Computer-assisted method for controlling a deposition process in an automated fiber placement (AFP) device (100) for forming a composite structure (108) from a pre-impregnated fibre containing tape material by deposition tape sections (110) of different lengths by means of a placement head (107) according to a deposition sequence, wherein the tape sections (110) are provided by cutting a tape material (104) and having at least one slicing region (101), comprising the steps of:
- providing a configuration data of the composite structure (108) to be formed,
- providing, on the basis of configuration data, a data for the deposition sequence of the tape sections (110) necessary for forming the composite structure, with the composite structure having a plurality of deposition positions (109) for the tape sections (110) and TARGET data for the length of the tape sections (110) to be deposited in the respective deposition positions (109),
- providing of an ACTUAL data for the position of a splicing region (101) in the tape material (104),
- providing of ACTUAL data on the length of the tape section (110) available for the deposition between a deposition position (109) and the splicing region (101) after considering the position of the splicing region (101) in a tape path (116),
- selecting a deposition position (109) for the tape section (110) by comparing the ACTUAL data for the length of the tape section (110) available after considering the position of the splicing region (101) with the TARGET data for the length of the tape section (110) to be deposited in the respective deposition position (109), and
- outputting a control signal for the automated fibre placement device (100) considering the splicing region (101) when locating the deposition position (109).

2. Method according to claim 1, wherein providing the ACTUAL data on the position of the at least one splicing region (101) is provided on the basis of data recorded by a sensor device (102) provided in the automated fiber placement device (100).

3. Method according to claim 1, wherein the tape material (104) is provided on a tape roll (103) and ACTUAL data on the position of the at least one splicing region (101) is provided on the basis of a position data of the at least one splicing region (101) in the rolled-up tape material (104) recorded during a production of the tape roll (103).

4. Method according to claim 3, wherein the rolled-up tape material (104) has a plurality of splicing regions (101) and provision of ACTUAL data on the positions of the plurality of splicing regions (101) is provided on the basis of position data of the plurality of splicing regions (101) in the rolled-up tape material (104) recorded during the production of the tape roll (103).

5. Method according to claim 3 or 4, wherein the provision of ACTUAL data of a length of tape sections (110) available for deposition between the splicing regions (101) on a tape roll (103) is provided on the basis of position data of the plurality of splicing regions (101) in the rolled-up tape material (104) recorded during the production of the tape roll (103).

6. Method according to claim 5, wherein a selection of a tape roll is provided by comparing the ACTUAL data for the lengths of the tape sections (110) available between the splicing regions (101) with the TARGET data for the length of the tape sections (110) to be deposited in the respective depositing positions (109) for forming the composite structure (108).

7. A computing device (112) configured to:
- receive data for a deposition sequence for tape sections (110) necessary for producing the composite structure (108), with the composite structure (108) having a plurality of deposition positions (109) for the tape sections (110),
- receive TARGET data for the length of the tape sections (110) to be deposited in the respective deposition position (109),
- receive data for the TARGET length of the tape section (110) to be deposited in the respective deposition position (109),
- receive ACTUAL data for a position of the splicing region (101) in the tape path (116) to be considered,
- receive data for a deposition position (109) for the tape section (110) based on the ACTUAL data for the length of the tape section (110) available before or after the splicing region (101),
- generate a deposition sequence based on the data; and
- output a control data file for an automated fiber placement device (100), the control data file including a plurality of machine-readable instructions.

8. An automated fibre placement (100) device for executing the method according to any one of claims 1 to 6, comprising a computing device (112) according to claim 7, a control unit (113) to move the placement head (107) according to the instructions of the control data file to deposit the respective tape sections (110) in the respective deposition positions (109).

9. Automated fibre placement (100) device according to claim 8, configured to detect splicing regions (101) by means of a sensor device (102), to cut the tape material (104) adjacent to the splicing region (101) by means of a cutting device (106) and to measure the length of the tape section (110) before or after the splicing region (101) and the placement head (107) by means of a length measuring device (111) before depositing the tape sections (110) in the deposition positions (109).

10. Automated fibre placement (100) device according to any one of claims 8 or 9, wherein the sensor device (102) and the length measuring device (111) are configured to output data on the ACTUAL position of the splicing region (101) to be considered and data on the ACTUAL length of the tape section (110) available in a tape path (116) before or after the splicing region (101) to be received by the computing device (112).

11. Automated fibre placement (100) device according to any one of claims 8 to 10, wherein the sensor device (102) and/or the length measuring device (111) is positioned adjacent to one of the tape roll (103), the cutting device (106) and the placement head (107).

12. Automated fibre placement (100) device according to any one of claims 8 to 11, wherein the cutting device (106) is positioned adjacent to one of the sensor device (102) and the placement head (107).

13. A computer program comprising instructions which, when the program is executed by a computing device (112) according to claim 7, prompt it to carry out the steps of the method according to any one of claims 1 to 6.

14. A computer-readable data carrier on which the computer program according to claim 13 is stored.

15. Composite structure (108) manufactured using the method according to any one of claims 1 to 6, wherein the composite structure (108) is preferably configured as an aircraft part.
